# EUROPEAN PATENT SPECIFICATION

(11) **EP 2 938 974 B1**
(45) Date of publication and mention of the grant of the patent: **11.03.2020**
(21) Application number: 13811531.6
(22) Date of filing: 19.12.2013
(51) Int. Cl.: G01G 9/00, G01G 17/00

(54) **MACHINE TO CONTROL THE WEIGHT OF SUBSTANCES INTRODUCED INTO CAPSULES, AND CORRESPONDING METHOD**
MASCHINE ZUR STEUERUNG DES GEWICHTS VON IN KAPSELN EINGEFÜHRTEN SUBSTANZEN UND ENTSPRECHENDES VERFAHREN
MACHINE PERMETTANT DE CONTRÔLER LE POIDS DE SUBSTANCES INTRODUITES DANS DES CAPSULES, ET PROCÉDÉ CORRESPONDANT

(30) Priority: 27.12.2012 IT MI20122245
(43) Date of publication of application: 04.11.2015
(73) Proprietor: I.M.A. Industria Macchine Automatiche S.p.A., 40064 Ozzano dell'Emilia (BO) (IT)
(72) Inventor: TREBBI, Roberto, I-40055 Castenaso (IT); CONSOLI, Salvatore Fabrizio, I- 40127 Bologna (IT); PORELLI, Antonio, I-40068 Idice Di San Lazzaro Di Savena (IT)
(74) Representative: Petraz, Gilberto Luigi
(86) International application number: PCT/EP2013/077454
(87) International publication number: WO 2014/102145

(56) References cited:
- EP-A1- 1 982 687
- WO-A2-2006/035285
- US-A1- 2008 219 803

## Description

### FIELD OF THE INVENTION

The present invention concerns a machine and a method to control the weight of individual substances or products introduced into capsules, in particular for pharmaceutical use.

The capsules in question are the type able to contain pharmaceutical products for both humans and animals.

### BACKGROUND OF THE INVENTION

It is known that substances or products of various type and composition can be introduced into capsules for pharmaceutical use, such as for example powders or pellets, tablets or other, both individually and joined with others, in the desired proportions in the same capsule.

Progress in medicine has allowed to obtain targeted pharmaceutical products that can be administered in very precise doses, and within very narrow tolerance limits, given their toxicity and/or the specific nature of intervention.

During the dosing of such substances inside the capsule, it is therefore important to keep control over the quantity, and therefore the weight, of the combined and/or individual substances introduced.

Normally, the capsules have a bottom, inside which the substances are introduced, and a lid, which is able to cover and/or close the bottom.

The bottom and the lid can have different sizes, both in diameter and in length, depending on the content the capsule must contain, which entails a consequent variation in weight of the capsule.

Furthermore, it is known that the variability in the weight of the bottom and lid of the same category of capsules, if this weight is not correctly detected, can be such as to affect the adequate quantity of the content, individual or total, of the individual substances introduced.

It is also known that producers of capsules produce them with a well defined and known tolerance limit in terms of weight.

It is also known that the dosages, both in terms of number of components, type of components and quantity of the individual components, are extremely varied.

For example, EP-A-1.982.687 (EP'687) describes a machine for filling capsules, formed by an upper shell and lower bottom, with a pharmaceutical product in micro-tablets. In this known machine a wheel is provided, equipped with an annular disc that has a plurality of peripheral holes, in each of which a weighing device is provided comprising a bushing having a capacitive transducer inside it which functions as a weight sensor, hence defining a multiplicity of positions for introducing doses and weighing. In fact, each bushing delimits internally a lower portion of a measuring chamber, while an upper portion of the measuring chamber is defined by an upper hole through which the micro-tablets are fed. Each measuring chamber is associated with a thruster member to thrust a lower bottom upward, parallel to the axis of said wheel, to a filling and weighing position. In this way, when the lower bottom is in the measuring chamber, the capacitive transducer is located laterally around the lower bottom, while the upper part of the weighing device is open so the tablets can be introduced.

In particular, EP'687 provides that, inside the measuring chamber, the lower bottom is first weighed empty, then filled incrementally, and on each occasion is subjected to intermediate weighing, and is finally weighed when complete. In other words, the empty lower bottom is weighed in a defined position inside the measuring chamber and subsequently, always in the same position, the dose of micro-tablets is inserted into the lower bottom and the overall weight of the lower bottom and the micro-tablets is weighed. Consequently, always in the same position, the capacitive transducer measures values of weight that gradually increase: however, this can result in errors of imprecision, in particular considering the very low values of weight which must be precisely measured on each occasion.

As mentioned above, moreover, the measuring chamber is open at the top, with respect to the direction of introduction of the micro-tablets: this inevitably entails the risk of contamination due to environmental dust or dust from the substance to be introduced.

Another possible disadvantage of the solution known from EP'687 is that the capacitive transducer in the measuring chamber is rotary, together with the wheel, and this makes the construction of the weight sensor and the machine more complicated. It also makes the correct and reliable reception/transmission of the data more difficult, worsening the maintenance conditions, increasing the power required of the machine and in short increasing management costs.

Documents WO-A-2006/035285 and EP 1 982 687 A1 disclose a machine for filling capsules provided with a plurality of seatings, each comprising a capacitive transducer to weigh the capsules. The capacitive transducer sensor is disposed laterally around the seating for measuring the weight.

As well as all these known features, typically of a pharmaceutical nature, and the problems connected thereto, there are also technical features that a machine used for filling and controlling the weight of capsules and for validating said capsules has to satisfy.

In the first place, such a machine must be as simple as possible, adopting the lowest possible number of weight detector means in order to reduce maintenance costs and downtimes of the machine, and to have a more reliable detection.

The machine must also be versatile, without needing to be particularly adapted depending on the category of capsules that it must be able to process.

Moreover, the weight detector means must possibly always be the same, even as the category of the capsule used and the substance introduced vary, in order to avoid equipping and storage costs.

Furthermore, the weight detector means of such a machine must have as simple as possible a configuration and functioning, and must be suitable to supply the data detected without the aid of auxiliary transmission and/or power devices, to prevent errors and/or distortions.

It is also necessary that the specific detection of capsules, both all together and as components, and as specific content, is easy to associate with the specific introduction or delivery mean of the specific substance introduced.

It is also necessary that for the purposes of calibrating, setting and controlling the machine, the weight detector means are able to detect systematically, and within very strict tolerances, both the individual weight of the lid and also that of the bottom. Furthermore, it is considered very important to be able to set or calibrate the weight detector means independently, for both the bottom and the lid, intending them for the specific detection carried out on each occasion, keeping the specific identification for the whole cycle and accurate on each occasion.

It is also necessary that the weight detector means are protected from ambient dust and from the substance to be introduced into the bottom, so that the detection function is not influenced and/or distorted.

It is also necessary to prevent the weight detector means or parts of them being necessarily made of precious material in the points directly in contact with, or close to, the substances to be introduced, so as to reduce the costs thereof.

It is therefore preferable that the weight detector means never come into contact with the substances to be introduced into the bottom, and that they are positioned in such a way as to render the entrance of contaminants at least improbable.

Users also require that they do not have to make modifications, or at least have to make only minimum modifications, to the machines already in their possession when it is necessary to implement the machine with, or replace, the weight detector means.

Another need is to control the dosing systems to eliminate deviations in said systems, deviations in the weight control systems, and variations due to environmental or process factors.

In accordance with these requirements and purposes, Applicant has studied a method and a machine for controlling the weight of substances, for example for pharmaceutical use, introduced into capsules.

According to the invention, the weight detector means have a new design and configuration, both with regard to the specific detection of the weight of the components of the capsule, such as the bottom and lid, and also with regard to the specific and progressive detection of the weight of the substances introduced into the capsule.

Moreover, another purpose of the present invention is to target each weight detector means for a specific and defined operation, obtaining precision, constancy and quality with regard to weight, to the final product and to the machine, which characteristics were previously unthinkable.

The invention has the further purpose of univocally correlating the specific function of introducing the substance/substances in a specific capsule with the specific function of detecting the weight of the specific capsule, which also allows detailed detections, both directly during processing and in feedback, of the individual introduction means and the weight control means, as well as the connected system.

The Applicant has devised, tested and embodied the present invention to overcome the shortcomings of the state of the art and to obtain these and other purposes and advantages.

It should be noted here that, in some forms of embodiment of the present invention described here, the concepts of "weight detection", "obtaining weight", "weighing" and similar terms that involve determining the weight of one of the components, both the initial and finished capsule, should be understood as a univocal connection between weight per se and the signal supplied by the element intended to verify the quantity, indicated by the word "weight", of product that is detected on each occasion during the normal cycle.

### SUMMARY OF THE INVENTION

The present invention is set forth and characterized in the independent claims, while the dependent claims describe other characteristics of the invention or variants to the main inventive idea.

In accordance with the above purposes, a method according to the present invention, which overcomes the limits of the state of the art, achieving the purposes proposed and eliminating the defects present in the state of the art, is used for the detailed control of the weight of individual and specific substances or products, introduced into capsules, in particular for pharmaceutical use.

The capsules consist of a bottom and a lid and can be of any category used in pharmacology.

According to one feature of the present invention, the method comprises at least a main step in which at least the bottom is moved from a dosing position, in which the substance is introduced inside the bottom by an introduction or delivery mean, to a weighing position, in which the bottom is weighed by a bottom weight detector mean or sensor, said bottom weight detector mean or sensor being able to be fixed and configured at least partly as a cylinder, for example completely as a cylinder or, according to a variant, shaped like an upturned glass, upturned cup or with a cross section like an upturned U.

In some forms of embodiment, moreover, the mean or sensor that detects the weight of the bottom, or bottom weight detector mean or sensor, can have an internal seating open downward and configured to receive the specific bottom to be weighed, and a lid which closes said internal seating at the upper part and covers the specific bottom in the high, weight control position. In this way the bottom weight detector mean or sensor has its entrance mouth facing downward and is covered at the upper part, as well as at the side: it is thus protected from the risk of contamination due to ambient dust, and the inside of the bottom is also protected. Furthermore, since the bottom is inserted in the internal seating of the bottom weight detector mean or sensor after it has already been filled, the risk of contamination by the substances to be introduced is also prevented. The weight sensor is therefore autonomous with respect to the introduction of the dose and is located in a distanced position from that where the dose is introduced.

Consequently, with the present invention maximum protection is obtained of the zone where the capsule to be weighed is introduced, so as to prevent even minimal distortions in the weighing due to factors not coherent with the filling and weighing cycle.

In some forms of embodiment, the bottom weight detector mean or sensor can be a sensor that detects the weight indirectly, that is, without contact.

According to some forms of embodiment of the invention, for the indirect weight detector mean or sensor of the bottom and/or lid, it is possible to use a capacitive sensor, or capacitive transducer, or a radiation detector sensor, for example using microwaves or infrared or other, or suchlike, so that the "weight" parameter can be defined by the signal that the sensor emits.

According to the invention, the components, the capsule and the bottom, alone and with one or more of the substances to be introduced, are associated with the respective sensors and the entity of the signal is detected on each occasion.

The signal detected is univocally associated with the weight value so that the processing and control system automatically performs the comparisons and controls.

Since the substances, due to the characteristic of the formula to which they belong, have a tolerance, the reference signals are obtained relating to the substances corresponding to its maximum and minimum values admitted, so that the controls can be limited to verifying whether the signal detected on each occasion is comprised between said limits.

According to a variant, the specific signal is instead detected, which is analyzed by the processing and control system.

According to the inventive idea, the sensor does not need to be made of precious materials, such as for example stainless steel, but less expensive materials can be used, such as aluminum or other alloys, in any case coherent with pharmaceutical regulations, which gives economic benefits in terms of construction and maintenance.

According to another feature of the present invention, the step of weighing the bottom, which as we said above can be limited to a control as to whether or not it is inside the two limits, is provided after the specific introduction of each of the substances into the specific bottom.

Therefore, for each specific substance introduced, specific sectors are defined, or at least a specific dosing position or station and a specific weighing position or station where the weight is detected and/or controlled.

Depending on the production systems therefore, each sector can have a considerable number of positions, for example even 10 or more.

The specific dosing stations, where there are as many dose delivery means as there are positions present in each sector where the bottoms are positioned, are part of a unit that is functionally connected on each occasion with the unit where the weight detector means are present. The dosing and weighing stations are stationary, while the sectors move from one dosing station, relating to a substance to be delivered, to the connected weighing station and then, possibly, passes to the others in a coordinated manner.

The invention provides that in each dosing station and in each weighing station, a number of dosing means and means to detect and/or control the weight are provided that correspond to the number of bottoms or positions present in the sectors. The invention provides that there is always a direct and univocal correlation between specific bottom, alone and with one or more substances, specific introduction mean and specific bottom weight detector mean or sensor, independently of the specific station.

As a result, a position in the respective sector in position "n" will always cooperate with a delivery mean in position "n" and with a bottom weight detector mean or sensor in position "n", so that lid, bottom and bottom with one or more substances will always be associated with those delivery means and those detectors and/or controllers, so that everything is univocally connected and identifiable.

Consequently, different and specific weight sensors are provided in the various weighing stations, to weigh, or control the weight, on each occasion of the quantity that is added to the bottom, in relation to the specific weighing station. In particular, for each weighing station the low, dose introduction position and the high, weighing position are separate and distinct, and the high, weighing position does not follow the low, dose introduction position, so that one only specific type and value, or order of size, of weighing is always carried out in the high weighing position.

Everything is detected, controlled and managed, also in feedback, in order to fine tune the system, by one or more command and control units.

The invention also provides that, according to a defined sequence, random or statistical or programmed, the components of the capsule and the individual components introduced therein are controlled as to weight by autonomous high-precision weighing systems. The data thus obtained are compared with the data that the machine detects, both in detailed and/or mediated form, making the consequent corrections to the machine. The controls can be manual or automatic.

Said control with precision instruments can be done either by taking on each occasion bottom and lid alone and with the substances in the specific stations or, more simply, at end-of-cycle and even with the capsule sealed. In this case too, the control of the weight with precision instruments will refer to the empty capsule and with one or more substances.

In all cases, the processing and control system inactivates the necessary positions or stations upstream and downstream, depending on the station where the verification is or will be performed.

According to another feature of the present invention, before the dosing steps, the method comprises a step of weighing and/or controlling the weight of the specific lid and the specific bottom.

Furthermore, according to the invention, the bottom is in a low position in the dosing station and a high position in the weighing station.

Thanks to this stratagem, the sensor never comes into contact, even accidentally, with the the substance introduced into the bottom.

Moreover, the weight detector mean is configured as a cylindrical container.

According to a variant, the container is closed at the top, that is, it is configured as an overturned glass, so as to have an entrance mouth open downward in correspondence with the bottom passing from the low position to the high position.

Insertion into the weight detector and/or controller mean is advantageously provided vertical, but it comes within the spirit of the invention to provide that it can also be inclined from 0° to 20° with respect to the vertical.

As a result, if the weight detector and/or controller mean has the entrance mouth facing downward, it is always and in any case protected from any type of dust, as it consists of a chamber located above the entrance mouth.

According to the invention, the detection and/or control of the weight of the specific empty lid and specific empty bottom (which detection and/or control occurs independently, capsule by capsule) allows to set or calibrate the system, allowing a detailed control of every individual and specific capsule filled; it also allows to control that the tolerances, allowed according to the specific method adopted, are respected.

According to some forms of embodiment described here, the bottom weight detector and/or controller mean or sensor is provided in a high position and in an autonomous position with respect to the introduction of the dose, and remains stationary in said position, at least with regard to lateral movement. This simplifies the construction of the detector mean and the machine itself, simplifies and guarantees the correctness of the data transmission and reception, reduces costs, improves maintenance and reduces the power required.

Furthermore, since the weight detector and/or controller mean is located above the bottom and autonomous therefrom, it allows to improve existing machines by allowing to instal the detector mean even at a later time, without modifications to the machine.

According to the invention, in the specific dosing station, a suitable introduction mean is positioned in relation to the mouth of the individual bottom and introduces the programmed quantity of substance into the bottom.

The present invention also concerns a machine or device to control and/or detect the weight, both in detail and with respect to the allowed tolerances. The invention also concerns a machine or device for control relating to that individual substance and/or progressive control of the individual substances or products introduced into capsules, in particular for pharmaceutical use.

According to one form of embodiment of the invention, the stations that have the introduction means and the weight control or weighing stations are stationary, whereas a first and second mobile mean or sector, one transporting the specific bottom of a capsule and the other transporting the specific lid of the specific capsule, move in coordination from one of the dosing stations to a corresponding weighing or weight tolerances control station.

The individual and specific weight detector and/or control means present in the substance introduction stations and the weighing stations recognize the specific bottom and, where necessary, the specific lid, so that everything is functionally connected.

According to a variant, the weight detector and/or control means are associated with the respective and specific positions of the bottom and, where necessary, also of the lid, but only in the weighing station are they positioned correctly with respect to the specific bottom or lid.

According to the invention, there is also the possibility of a feedback calibration, when the machine is already functioning, to calibrate the individual and specific quantity that the introduction mean introduces into the specific bottom, as there is a direct functional connection between a determinate and specific weight control sensor and/or detector and the specific functionally connected introduction mean.

According to a variant form of embodiment of the invention, in order to obtain a fine control of the machine, each weighing or introduction station is associated with means that on each occasion take a bottom and weigh it with precision balance, using the data detected to control and calibrate the machine.

According to this solution, pick-up means are possibly present for said fine control, which are functionally associated with means to intercept the delivery of the components upstream and downstream.

The invention also concerns a simplified solution in which the control with high-precision weighing instruments is exercised on one or more, or all the bottoms of one sector of a weighing station, together with the lid when the capsule is closed.

Depending on the quality of the control, the weight of a closed capsule will be verified with and without one or more additional components, or the weight will be verified of a part of said components associated with that sector, or again the weight will be verified of all those components present in said sector.

The values detected are then processed so as to validate or set/calibrate the sensor or sensors in that weighing station and progressively all the weighing stations, also in feedback. It is obvious that the weight control processes, which comprise the off-line verification of the weight with high-precision weighing instruments, impose a progressive inactivation upstream and downstream of the stations, in order to prevent wastage.

Therefore, the inventive idea of the present invention achieves all the purposes for which it was studied, experimented and obtained.

### BRIEF DESCRIPTION OF THE DRAWINGS

These and other characteristics of the present invention will become apparent from the following description of some forms of embodiment, given as a non-restrictive example, of a single dosing station functionally connected to the respective single weighing and/or weight control station. With reference to the attached drawings we have:
- fig. 1 shows a sequence of operations relating to the introduction and control method, and the corresponding machine according to the present invention, three individual dosing and weight control stations being shown by way of example;
- figs. 2-12 show the individual steps shown by way of example in fig. 1;
- fig. 13 shows schematically a possible machine configured to execute the method according to the present invention and to verify the real weight at end-of-cycle.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof.

With reference to the attached drawings, a method and a corresponding machine for dosed introduction and connected weighing 10 according to the present invention are used to control and/or verify the progressive weight of individual substances or components or products, introduced into capsules 30, in particular for pharmaceutical use, said capsules 30 being formed by a bottom 19 and a lid 20.

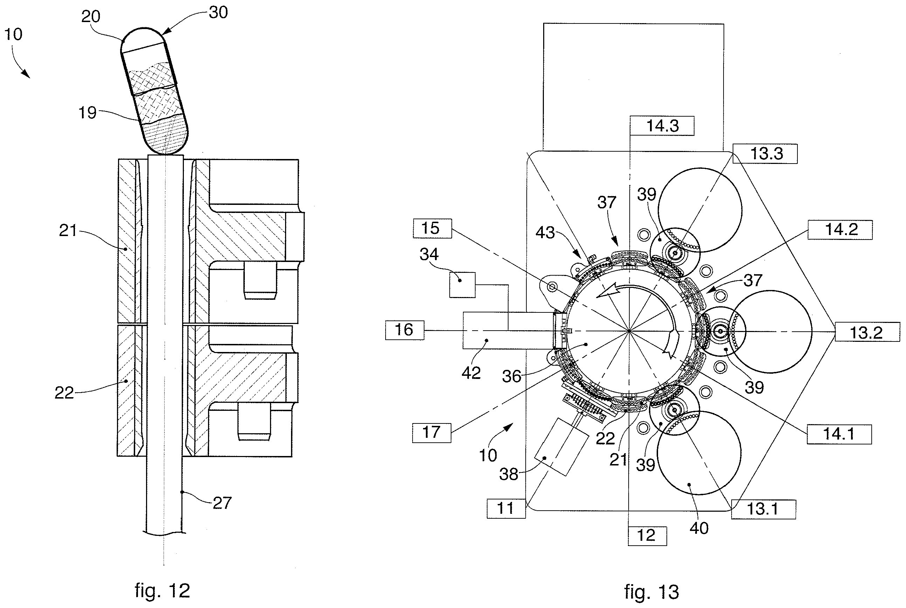

A machine of the type in question can be obtained for example with a circular drum 36, rotating step-wise, as in fig. 13, which carries a plurality of mobile sectors 37 in which there is an upper mobile part 21 and a lower mobile part 22.

The circular drum 36 initially cooperates with a capsule loader 38 and with dosing stations 13.

The dosing stations 13, in the example in fig. 13, cooperate with a dosing unit 39 which receives the product to be introduced into the bottoms 19. The dosing unit 39 comprises introduction means 28 to dose the product into a respective bottom 19. In particular, the product received from the dosing unit 39 is delivered to the introduction means 28 which provide to introduce the dose into the specific bottom 19 in a coordinated manner with the presence of the bottom 19.

The product is delivered to the dosing unit 39 from a specific product container 40.

The machine 10 can provide a free station 43 for replacement, maintenance or other operations, a discharge unit 42 and an expulsion station 17 to expel the capsules to be discarded.

The discharge unit 42, in fig. 13, is connected to means that send the capsules 30 to be controlled with the precision balance 34.

Fig. 13 shows the possibility that the machine can introduce up to three different products or substances into the capsule 30.

One or more control and command units, not shown, manage everything.

The capsules 30 which the system has verified as containing one or more substances whose weight, precise or on the basis of the range of tolerance, does not fall within the desired parameters, are expelled in the expulsion station 17.

In this case, the dosing and weighing machine 10 comprises a plurality of mobile sectors 37 each consisting of a first lower mobile part 22 and a second upper mobile part 21, which are functionally connected and move in a coordinated manner.

The upper mobile part 21 and the lower mobile part 22 cooperate on each occasion with specific stationary stations, respectively dosing or introduction stations 13 and weighing stations 14 which are functionally connected.

In particular, the upper mobile part 21 and the lower mobile part 22 can be positioned in the dosing stations 13 on distinct vertical planes.

The plurality of stations 13 and 14 are repeated in a structurally identical way along the machine 10.

For each weighing station 14, or in direct connection with it, in one case shown by way of example and illustrative, the machine can have one or more pick-up devices 31 which on each occasion, systematically or randomly, pick up a bottom 19 from a weighing station 14. After it has been picked up it is weighed with a precision balance 34, alone or with one or more of the individual products introduced in a unitary or progressive form.

According to a variant, a specific bottom 19, or a plurality of these per sector 37, or all those in one sector, are controlled for weight at the end of the machine 10 where they are directed to the precision balance 34 by the discharge unit 42.

Whether the capsule or capsules 30 are extracted in each weighing station 14 or at the end-of-cycle, the control and command unit inactivates the specific stations concerned on each occasion in a coordinated manner.

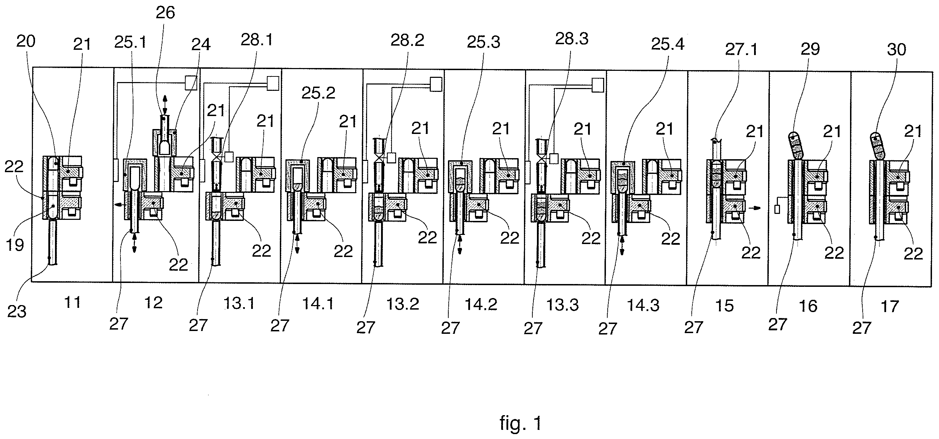

The method according to the invention provides that the schematic cycle of dosed introduction and weighing, shown as a sequence in fig. 1 and as individual stations in the subsequent drawings, assumes a plurality of configurations in order to define a plurality of stations, in this specific case 11, 12, 13, 14, 15, 16 and 17.

The dosed introduction, the control and/or verification of the weight of the, and in the bottoms 19 and the discharge of the capsules 30 occurs in correspondence to said stations.

In the case shown here using fig. 1, a dosed introduction and weighing machine 10 described with reference to fig. 13 for example, can comprise:
- a rotating circular drum 36, provided with respective mobile sectors 37;
- a capsule feeding and opening station 11;
- a possible control station 12 to control the weight of the components of the capsules;
- in the case shown here three stationary dosing stations 13, indicated by the reference numbers 13.1, 13.2, 13,3;
- in the case shown here three stationary weighing stations 14.1, 14.2, 14.3;
- a stationary capsule closing station 15;
- a stationary discharge station 16 of the good capsules, which cooperates with a discharge unit 42;
- a stationary expulsion station 17 of the capsules to be discarded.

In the example described here, the weighing stations 14.1, 14.2, 14.3 are equal in number to the dosing stations 13.1, 13.2, 13.3 and are disposed at intervals downstream of each dosing station 13.1, 13.2, 13.3 (fig. 1).

In the feeding and opening station 11 in which the mobile sectors 37 move, consisting of upper mobile part 21 and lower mobile part 22 aligned with each other, the capsule 30 is introduced and divided into its two components.

After the feeding and opening station 11, the sectors 37 move from station to station with the parts 21 and 22 distanced, in order to then position themselves with the parts 21 and 22 in a coinciding position, for example overlapping and aligned according to vertical axes, in correspondence to the capsule closing station 15, the discharge station of the good capsules 16 and the expulsion station 17 of the capsules to be discarded.

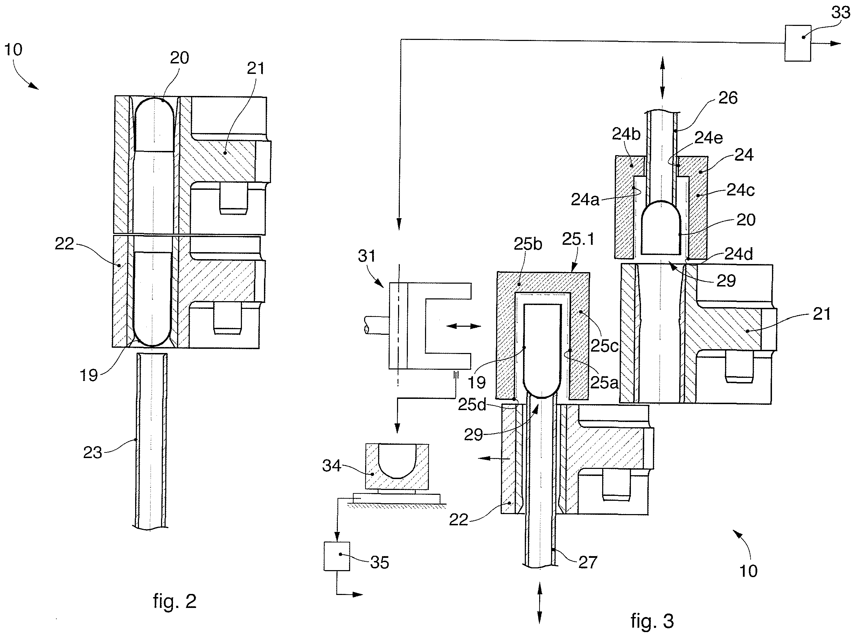

In the station 11 the bottom 19 is separated from the lid 20 by means of an extractor mean 23, which uses depression for example, or by generating a sub-atmospheric pressure, so that the lid 20 remains in the upper mobile part 21 while the bottom 19 remains in the lower mobile part 22 (figs. 1 and 2), both disposed in a specific position "n" in the receiving sector 37.

In the station 12 the n^{th} lid 20 is taken inside an n^{th} detector sensor and/or controller of the weight of the lid 24 in order to detect and/or control the weight of the n^{th} lid 20 by means of an n^{th} extractor mean of the lid 26, such as a bar, peg, pin or thruster. In the same station 12 the n^{th} bottom 19 is taken inside an n^{th} detector sensor of the weight of the bottom 25.1, 25.2, 25.3 and 25.4, configured to detect and/or control the weight of the n^{th} bottom 19, by means of an n^{th} positioning mean 27, that, for example, can operate in depression, or by means of the generation of a sub-atmospheric pressure.

In some forms of embodiment, each detector sensor of the weight of the bottom 25.1, 25.2, 25.3 and 25.4 can be configured at least partly as a cylinder. In particular, according to some forms of embodiment, each detector sensor of the weight of the bottom 25.1, 25.2, 25.3 and 25.4 can have an internal seating 25a open downward and configured to receive the specific bottom 19 to be weighed and a lid 25b, which closes the internal seating 25a at the upper part and covers the specific bottom 19 in the high weight control position. In particular, the internal seating 25a can be defined by a lateral wall or shell 25c, with an essentially cylindrical shape for example. A lower entrance opening or mouth of the bottom 25d can be provided, through which it is possible to insert the bottom 19 into the internal seating 25a. For example, according to possible variant forms of embodiment, one or more of the detector sensors of the weight of the bottom 25.1, 25.2, 25.3 and 25.4 can be configured as an overturned glass, or overturned cup, or with an overturned "U" cross section.

In possible forms of embodiment, the n^{th} detector sensor and/or controller of the weight of the lid 24 can be configured like the detector sensors of the weight of the bottom 25.1, 25.2, 25.3 and 25.4. In this case too, an internal seating 24a can be provided, configured to receive the lid 20 and an upper lid 24b, which in this case can provide, for example, an upper opening 24e for the passage of the n^{th} lid extractor mean 26 that acts on the lid 20. The internal seating 24a can, for example, be delimited by a lateral wall 24c and a lower entrance opening or mouth of the lid 24d can be provided.

If an autonomous control to accurately verify the weight is provided, a precision balance 34 can be used.

In this case, in each weighing or introduction station the bottom 19 on each occasion, and also, if necessary, the lid 20 are picked up.

The weight control system using the precision balance 34 can be manual or semi-automatic or automatic. In the attached drawings, by way of example, an automatic system is provided.

A pick-up device 31 picks up the bottom 19 which on each occasion will be empty or with only one substance or with several substances. The pick-up device 31 automatically positions the bottom 19 in relation to the precision balance 34 according to the instructions which it receives and which are imparted, for example, by a specific command and control system 33, which can dialog with the command and control system, not shown, of the machine and/or loading and progressive weighing device.

The precision balance 34 sends the signal of weight detected to a data comparison, correction and processing system 35, which can be autonomous or integrated, which compares it with the weight data detected by the specific bottom weight sensor 25.1, 25.2, 25.3 and 25.4.

On the contrary, when the machine provides a control with the capsule 30 closed at the end-of-cycle, by means of the precision balance 34, as we said, the control can involve any capsule 30 whatsoever of a sector 37, or a random group of capsules 30 of the sector 37, or again all the capsules 30 in the sectors 37.

Automatic progressive inactivation systems of the products, upstream and downstream, are managed by the command and control unit.

Even if verification occurs downstream and with the capsule closed, the system recognizes the position or positions and/or the specific sector 37, and the control and setting/calibration of the sensors that detect and/or control the weight of the lid 24 and the sensors that detect and/or control the weight of the bottom 25.1, 25.2, 25.3 and 25.4 or the dischargers 42 connected to the introduction means 28 occurs automatically. The command and control unit signals any possible anomalies.

In correspondence with the weighing or weight control stations, by means of the specific n^{th} lid weight detector sensors 24 and the n^{th} bottom weight detector sensors 25.1, 25.2, 25.3 and 25.4, the weighing and/or weight control is carried out.

In variant forms of embodiment, one or more of the specific n^{th} lid weight detector sensors 24 and n^{th} bottom weight detector sensors 25.1, 25.2, 25.3 and 25.4 can be positioned stationary, while the bottom 19 can be mobile toward the n^{th} lid weight detector sensor 24 and the n^{th} bottom weight detector sensors 25.1, 25.2, 25.3 and 25.4.

In other variant forms of embodiment, one or more of the specific n^{th} lid weight detector sensors 24 and n^{th} bottom weight detector sensors 25.1, 25.2, 25.3 and 25.4 can be mobile from a non-detecting position to a detecting position.

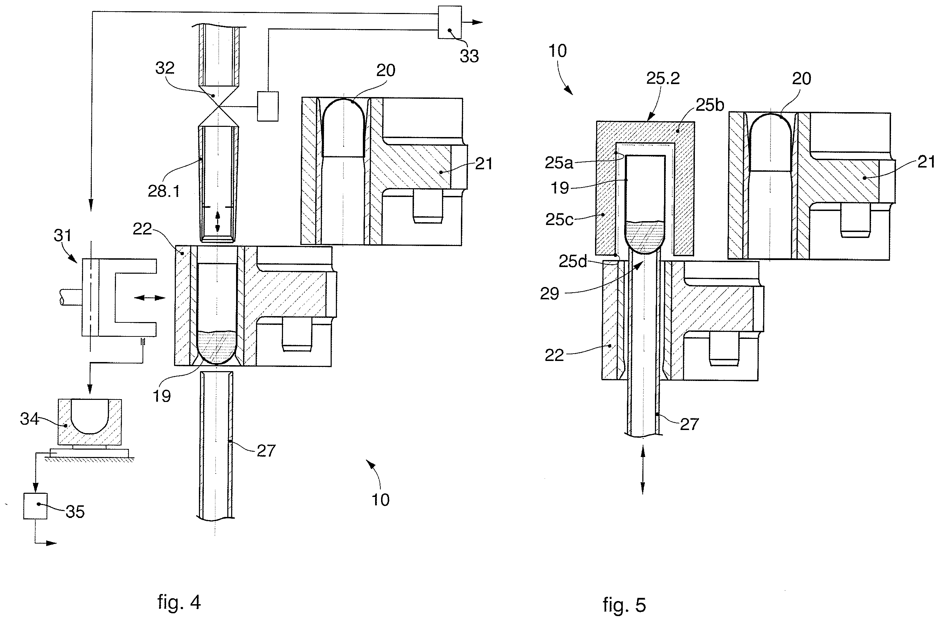

Once the weights of the specific n^{th} bottom 19 and n^{th} lid 20 have been detected and/or controlled in the station 12, the mobile parts 21 and 22 move into the subsequent dosing station 13.1 (fig. 4), in correspondence with which the n^{th} introduction mean 28 introduces the first substance or component inside the specific n^{th} bottom 19.

Subsequently, in the weighing station 14.1 the n^{th} positioning mean 27 moves the specific n^{th} bottom 19 upward, which contains the first component, inside the n^{th} detector sensor of the weight of the bottom 25.2, configured to detect and/or control the weight of the n^{th} bottom 19 (fig. 5).

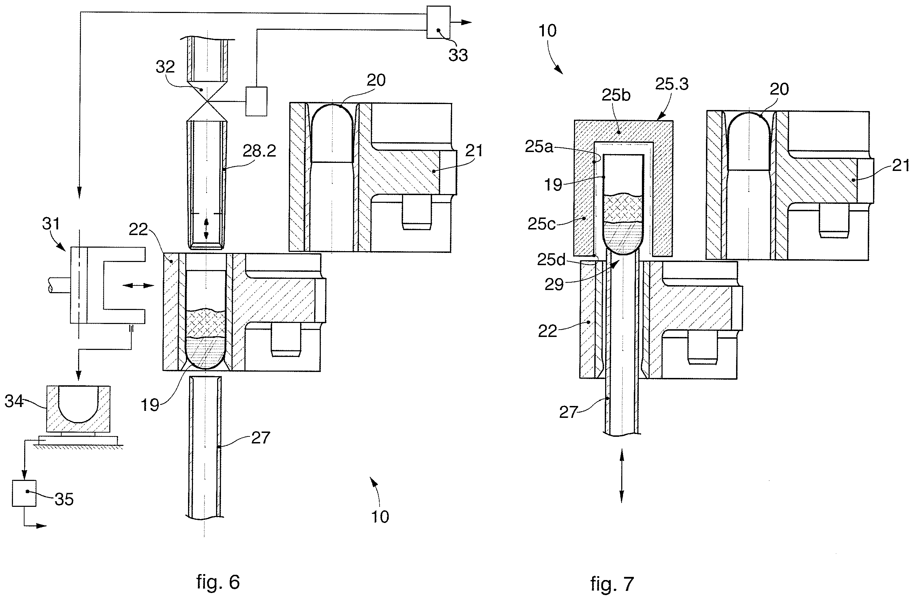

Once the weights of the specific n^{th} bottom 19 have been detected and/or controlled, containing the first component, the mobile parts 21 and 22 move to the dosing station 13.2 (fig. 6), in correspondence with which the dosed introduction occurs of the second component inside the specific n^{th} bottom 19 already containing the first component.

In the dosing station 13.2 of the second component, an n^{th} introduction mean 28.2 discharges inside the specific n^{th} bottom 19 the desired quantity of the second component.

Subsequently, in the weighing station 14.2, the n^{th} positioning mean 27 moves the specific n^{th} bottom 19 upward, containing the first and second component, inside the specific bottom weight detector sensor 25.3 configured to detect and/or control the weight of the n^{th} bottom 19 (fig. 7).

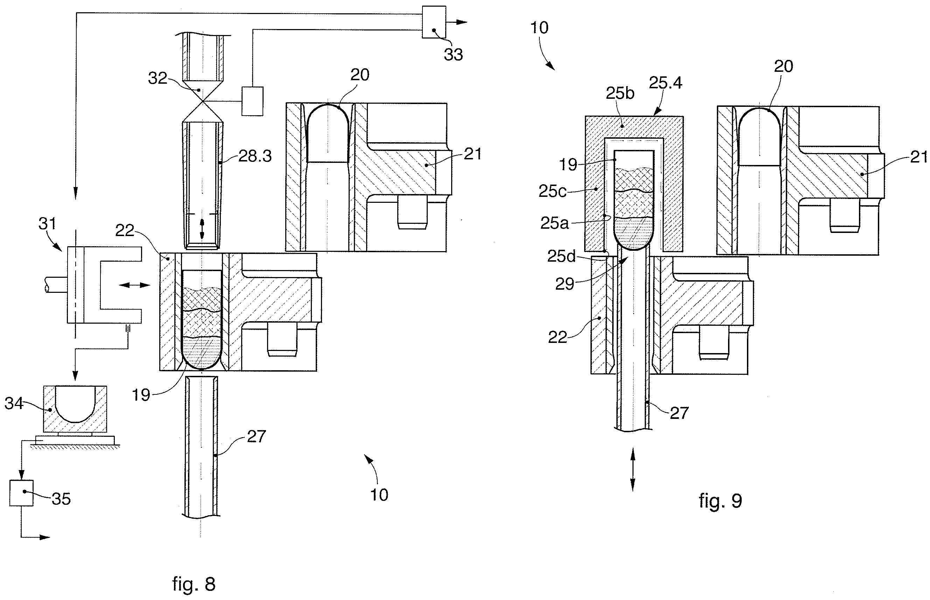

The same method is repeated in dosing station 13.3 in correspondence with which the third component is loaded into the specific bottom 19 by means of an n^{th} introduction mean 28.3 (fig. 8).

Subsequently, in weighing station 14.3 the n^{th} positioning mean 27 moves the specific n^{th} bottom 19 upward, containing the first, the second and the third component, inside the specific bottom weight detector sensor 25.4 configured to detect and/or control the weight of the n^{th} bottom 19 (fig. 9).

In the same way, all the n^{th} lid weight detector sensors 24, and all n^{th} bottom weight detector sensors n^{th} 25.1, n^{th} 25.2, n^{th} 25.3 and n^{th} 25.4 have an entrance mouth 29 in their lower part, respectively for the specific n^{th} lids 20 and n^{th} bottoms 19. Furthermore, the specific n^{th} lid weight detector sensor 24 and n^{th} bottom weight detector sensors n^{th} 25.1, n^{th} 25.2, n^{th} 25.3 and n^{th} 25.4 are disposed in use outside the mobile parts 21 and 22 which move from one station to the next.

In stations 14.1, 14.2 and 14.3 the weight is detected and/or controlled as combination of the components introduced into the specific n^{th} bottom 19, but it can be decomposed, by a command and control unit (not shown), depending on the weights detected and/or controlled for each component introduced into the previous stations. In this way it is possible to determine and/or control the weight of each component introduced into one of the n^{th} bottoms 19.

According to a variant, suitable command and control apparatuses carry out verifications and possible feedback corrections, so as to guarantee a correct and adequate dosage.

Advantageously, the fact that the lid weight detector sensors 24 and bottom weight detector sensors 25.1, 25.2, 25.3 and 25.4 remain stationary and with their entrance mouth 29 facing downward, on the one hand simplifies the mechanics and the electrical and electronic parts of the dosed introduction and weighing machine 10, guaranteeing better results and less maintenance, and on the other hand prevents deposits of dust from forming in the lid weight detector sensor 24 and the bottom weight detector sensor 25.1, 25.2, 25.3 and 25.4, and also from entering into accidental contact with a component introduced into the bottom 19.

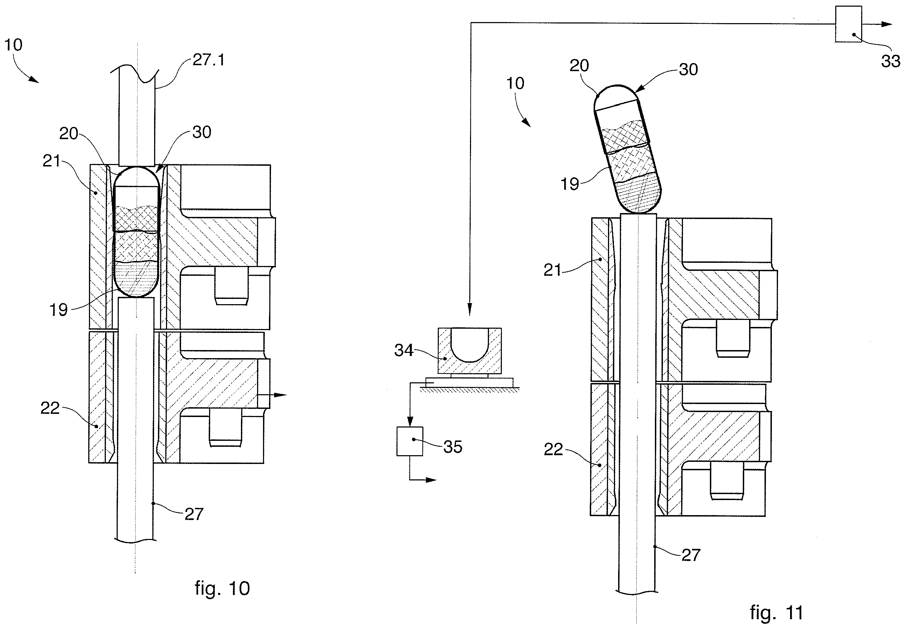

Subsequently, in the capsule closing station 15, the mobile parts 21 and 22 are aligned to recompose the specific capsule 30, that is, to reposition the specific lid 20 on the specific bottom 19 using the positioning means 27 and positioning means 27.1 (fig. 10).

Subsequently, in the discharge station 16, the positioning mean 27 moves upward so as to deliver to the discharge unit 42 the capsules 30 correctly filled (fig. 11) toward a subsequent station, not shown in the drawings, such as for example a packaging station.

In a subsequent step, in the expulsion station 17, the positioning mean 27 moves upward so as to discharge the specific capsule 30, if doses have not been introduced into it, or not provided adequately (fig. 12). Discharge is performed toward a discard station, not shown in the drawings.

The control method has been described with reference to three components to be inserted inside the specific bottom 19. However, the control method can be used in the same way for any number of components to be inserted inside a specific bottom 19.

According to the invention, the various stations can be disposed circumferentially around a drum. According to a variant, the various stations are disposed in a closed-ring carousel.

The mechanical means to drive the various extractor means 23, positioning means 27, 27.1 and introduction means 28.1, 28.2, 28.3, and also to obtain the specific position of the lower mobile part 22 with respect to the upper mobile part 21, are means of a design nature that do not affect the inventive idea.

It is clear that modifications and/or additions of parts may be made to the method and machine 10 as described heretofore.

It is also clear that, although the present invention has been described with reference to some specific examples, a person of skill in the art shall certainly be able to achieve many other equivalent forms of method and machine, having the characteristics as set forth in the claims and hence all coming within the field of protection defined thereby.

## Claims

1. Machine to control the weight of one or more substances introduced in sequence into specific capsules (30) for pharmaceutical purposes, each of said specific capsules (30) consisting of a specific bottom (19) and a specific lid (20), comprising not only stations to feed and open specific capsules (11), but also at least a control station (12) to control the weight of said specific bottom (19) and said specific lid (20), and at least a dosing station (13) with a respective weighing station (14), said dosing (13) and weighing stations (14) being provided for each of said substances introduced into said specific bottom (19), and mobile parts, said specific bottom (19) and said specific lid (20) configured to be moved in coordinated synchrony by mobile parts, respectively lower (22) and upper (21), said lower (22) and upper (21) mobile parts configured to be positioned, in said dosing stations (13), on distinct vertical planes, the control station (12) further comprises a detector sensor (25.1, 25.2, 25.3, 25.4) of the weight of the specific bottom (19) and a sensor (24) to detect and/or control the weight of the specific lid (20), said specific bottom (19), whether empty or with one or more substances introduced, and said specific lid (20) are each associated with respective extractor means (26) and positioning means (27) configured to be moved from a low dosing position to a high weighing position where said bottom (19) and said lid (20) each configured to cooperate with the detector sensor (25.1, 25.2, 25.3, 25.4) of the weight of the specific bottom (19) and the sensor (24) to detect and/or control the weight of the specific lid (20), wherein each detector sensor (25.1, 25.2, 25.3, 25.4) of the weight of the specific bottom (19) is configured at least partly as a cylinder, having an internal seating (25a) open downward and configured to receive the specific bottom (19) to be weighed and a lid (25b), which closes said internal seating (25a) at the upper part and covers the specific bottom (19) in the high, weight control position, the internal seating (25a) being defined by a lateral wall, or shell, (25c), with an essentially cylindrical shape, a lower entrance opening of the bottom (25d) being provided for inserting the specific bottom (19) into the internal seating (25a), wherein said machine is associated with at least a precision balance (34), wherein each of the weighing stations (14) is associated with one or more pick-up devices (31) configured to control the weigh, configured to pick-up a specific bottom (19) from a weighing station (14), after a specific bottom (19) has been picked up, said specific bottom (19) is weighed with said at least a precision balance (34); wherein said machine comprises a control station (12) configured to control the weight of the specific lid (20), the capsules (30) and the specific bottom (19).

2. Machine as in claim 1, **characterized in that** the specific bottoms (19) and the specific lids (20) of the specific capsules (30) are located in sectors (37).

3. Machine as in claim 1 or 2, **characterized in that** it comprises at least the following stations cooperating with specific sectors (37):
- a station for feeding and opening the capsules (11);
- at least a dosing station (13);
- at least a weighing station (14):
- a station for closing the capsules (15);
- a station for discharging the good capsules (16);
- a station for expelling the capsules to be discarded (17).

4. Machine as in any claim hereinbefore, **characterized in that** the bottom weight detector sensor (25; 25.1, 25.2, 25.3, 25.4) is a weight detector of the indirect type, chosen from a group comprising a capacitive sensor, or a radiation detector sensor, in particular a microwave or infrared detector sensor.

5. Method to control the weight of one or more substances introduced in sequence into specific capsules (30) for pharmaceutical purposes, each of said specific capsules (30) consisting at least of a specific bottom (19) and a specific lid (20), **characterized in that** said method comprises at least a main step in which at least said specific bottom (19) is moved from a low position for the introduction of the dose, in which said substance is introduced in a controlled manner into said specific bottom (19), to a high position for controlling the weight, in which said specific bottom (19) is weighed, or the weight of said bottom (19) is controlled, by a specific detector sensor (25; 25.1, 25.2, 25.3, 25.4) of the weight of the specific bottom (19), said detector sensor (25; 25.1, 25.2, 25.3, 25.4) of the weight of the specific bottom (19) being at least partly configured as a cylinder, having an internal seating (25a) open downward and configured to receive the specific bottom (19) to be weighed and a lid (25b), which closes said internal seating (25a) at the upper part and covers the specific bottom (19) in the high, weight control position, the internal seating (25a) being defined by a lateral wall, or shell, (25c), with an essentially cylindrical shape, a lower entrance opening of the bottom (25d) being provided for inserting the bottom (19) into the internal seating (25a), wherein at least a precision balance (34) weighs a bottom (19) picked up by one or more pick-up devices (31) from a weighing station (14),
wherein the weight of the lid (20), the capsules (30) and the bottom (19) is controlled by a control station (12).

6. Method as in claim 5, **characterized in that,** upstream of a first introduction station, at least the weight of the specific bottom (19) is weighed and/or controlled.

7. Method as in claims 5 or 6, **characterized in that** said specific detector sensor (25; 25.1, 25.2, 25.3, 25.4) of the weight of the specific bottom (19) is positioned stationary, the specific bottom (19) being mobile toward said weight detector sensor (25; 25.1, 25.2, 25.3, 25.4).

8. Method as in claims 5 or 6, **characterized in that** said specific detector sensor (25; 25.1, 25.2, 25.3, 25.4) of the weight of the specific bottom (19) is mobile from a position in which it does not detect the weight to a position in which it detects the weight.

9. Method as in any claim from 5 to 8, **characterized in that** said main step is provided after the introduction of each of said particular substances into said specific bottom (19).

10. Method as in any claim from 5 to 9, **characterized in that,** before said main step, it comprises a step in which said specific bottom (19) and said specific lid (20) are associated to one of said specific capsules (30) and put respectively in a lower mobile part (22) and an upper mobile part (21) of a sector (37) of a corresponding machine for dosed introduction and weighing (10), wherein said lower mobile part (22) and said upper mobile part (21) move in synchrony so as to define said dose introduction position and said weight control position, wherein during the introduction of the dose into the specific bottom (19), said lower mobile part (22) is positioned laterally or radially with respect to said upper mobile part (21).

11. Method as in any claim from 5 to 10, **characterized in that,** in correspondence with said dose introduction position, introduction means (28.1, 28.2, 28.3) deliver a desired quantity of the particular substance, introducing it inside said specific bottom (19), wherein based on the data detected at least by the specific detector sensor (25; 25.1, 25.2, 25.3, 25.4) of the weight of the specific bottom (19), a control and command unit acts in feedback and regulates the delivery of said particular substance by the specific introduction mean (28.1, 28.2, 28.3).

12. Method as in any claim from 5 to 11, **characterized in that** controls are carried out on the weight at least of one specific bottom (19) alone and with one or more substances introduced, by means of said precision balance (34), the datum detected being used to re-calibrate individual and specific delivery stations.

13. Method as in claim 12, **characterized in that** the control using the precision balance (34) is carried out by picking up the specific bottom (19) in a specific station, said pick-up being automated, or alternatively the precise weight control of at least one specific bottom (19) alone and with one or more substances introduced, using the precision balance (34), wherein the datum detected is used to re-calibrate individual and specific delivery stations, is carried out at end-of-cycle with the capsule (30) closed.

14. Method as in any claim from 5 to 13, **characterized in that** it provides a weighing or weight control step of the specific lid (20) mating with the specific bottom (19) which is weighed, or of which the weight is controlled, carried out by a detector sensor (24) and/or controller of the weight of the specific lid (20).

15. Method as in any claim from 5 to 14, **characterized in that** at least the detector sensor (25.1, 25.2, 25,3, 25.4) of the weight of the specific bottom (19) is a weight detector of the indirect type, chosen from a group comprising a capacitive sensor, or a radiation detector sensor, in particular a microwave or infrared detector sensor.

## Patentansprüche

1. Maschine zur Kontrolle des Gewichts von einer oder mehreren Substanzen, die der Reihe nach in spezifische Kapseln (30) für pharmazeutische Zwecke eingeführt werden, wobei jede der spezifischen Kapseln (30) aus einem spezifischen Unterteil (19) und einer spezifischen Kappe (20) besteht, umfassend nicht nur Stationen zum Zuführen und Öffnen spezifischer Kapseln (11), sondern ebenfalls mindestens eine Kontrollstation (12), um das Gewicht des spezifischen Unterteils (19) und der spezifischen Kappe (20) zu kontrollieren, und mindestens eine Dosierstation (13) mit einer jeweiligen Wiegestation (14), wobei die Dosier- (13) und Wiegestationen (14) für jede der Substanzen vorgesehen sind, die in das spezifische Unterteil (19) eingeführt werden, und bewegliche Teile, wobei das spezifische Unterteil (19) und die spezifische Kappe (20) ausgelegt sind, um in koordinierter Synchronie durch bewegliche Teile, jeweils untere (22) und obere (21), bewegt zu werden, wobei untere (22) und obere (21) bewegliche Teile ausgelegt sind, um in die Dosierstationen (13) auf verschiedenen vertikalen Ebenen positioniert zu werden, wobei die Kontrollstation (12) ferner einen Erfassungssensor (25.1, 25.2, 25.3, 25.4) des Gewichts des spezifischen Unterteils (19) und einen Sensor (24) zum Feststellen und/oder Kontrollieren des Gewichts der spezifischen Kappe (20) umfasst, wobei das spezifische Unterteil (19), entweder leer oder mit einer oder mehreren eingeführten Substanzen, und die spezifische Kappe (20) jeweils mit entsprechenden Extraktormitteln (26) und Positionsmitteln (27) assoziiert sind, die ausgelegt sind, um aus einer niedrigen Dosierposition in eine hohe Wiegeposition bewegt zu werden, wobei das Unterteil (19) und die Kappe (20) jeweils ausgelegt sind, um mit dem Erfassungssensor (25.1, 25.2, 25.3, 25.4) des Gewichts des spezifischen Unterteils (19)und dem Sensor (24) zusammenzuarbeiten, um das Gewicht der spezifischen Kappe (20) festzustellen und/oder zu kontrollieren, wobei jeder Erfassungssensor (25.1, 25.2, 25.3, 25.4) des Gewichts des spezifischen Unterteils (19) mindestens teilweise als ein Zylinder konfiguriert ist, der einen internen, nach unten offenen Sitz (25a) aufweist und ausgelegt ist, um das zu wiegende, spezifische Unterteil (19) aufzunehmen, und eine Kappe (25b), die den internen Sitz (25a) am oberen Teil schließt und das spezifische Unterteil (19) in der hohen Gewichtskontrollposition bedeckt, wobei der interne Sitz (25a) durch eine Seitenwand oder Hülle (25c) mit einer im Wesentlichen zylindrischen Form definiert wird, wobei eine untere Eingangsöffnung des Unterteils (25d)zum Einsetzen des spezifischen Unterteils (19) in den internen Sitz (25a) vorgesehen ist,
wobei die Maschine mit mindestens einer Präzisionswaage (34) assoziiert ist,
wobei jede der Wiegestationen (14) mit einer oder mehreren Aufgreifvorrichtungen (31) assoziiert ist, ausgelegt, um das Gewicht zu kontrollieren, ausgelegt, um ein spezifisches Unterteil (19) aus einer Wiegestation (14) aufzugreifen; nachdem ein spezifisches Unterteil (19) aufgegriffen worden ist, wird das spezifische Unterteil (19) mit der mindestens einen Präzisionswaage (34) gewogen;
wobei die Maschine eine Kontrollstation (12) umfasst, ausgelegt, um das Gewicht der spezifischen Kappe (20), der Kapseln (30) und des spezifischen Unterteils (19) zu kontrollieren.

2. Maschine wie in Anspruch 1, **dadurch gekennzeichnet, dass** die spezifischen Unterteile (19) und die spezifischen Kappen (20) der spezifischen Kapseln (30) in Sektoren (37) angeordnet sind.

3. Maschine wie in Anspruch 1 oder 2, **dadurch gekennzeichnet, dass** sie mindestens die folgenden Stationen umfasst, die mit spezifischen Sektoren (37) zusammenarbeiten:
- eine Station zum Zuführen und Öffnen der Kapseln (11) ;
- mindestens eine Dosierstation (13);
- mindestens eine Wiegestation (14);
- eine Station zum Schließen der Kapseln (15);
- eine Station zum Entladen der guten Kapseln (16);
- eine Station zum Ausstoßen der zu verwerfenden Kapseln (17).

4. Maschine nach einem vorstehenden Anspruch, **dadurch gekennzeichnet, dass** der Unterteilgewichtserfassungssensor (25; 25.1, 25.2, 25.3, 25.4) ein Gewichtserfasser des indirekten Typs ist, ausgewählt aus einer Gruppe, umfassend einen kapazitiven Sensor oder einen Strahlungserfassungssensor, insbesondere einen Mikrowellen- oder Infrarot-Erfassungssensor.

5. Verfahren zur Kontrolle des Gewichts von einer oder mehreren Substanzen, die der Reihe nach in spezifische Kapseln (30) für pharmazeutische Zwecke eingeführt werden, wobei jede der spezifischen Kapseln (30) mindestens aus einem spezifischen Unterteil (19) und einer spezifischen Kappe (20) besteht, **dadurch gekennzeichnet, dass** das Verfahren mindestens einen Hauptschritt umfasst, bei dem mindestens das spezifische Unterteil (19) aus einer niedrigen Position zur Einführung der Dosis, in der die Substanz auf kontrollierte Weise in das spezifische Unterteil (19) eingeführt wird, in eine hohe Position bewegt wird, um das Gewicht zu kontrollieren, in der das spezifische Unterteil (19) gewogen wird oder das Gewicht des Unterteils (19) durch einen spezifischen Erfassungssensor (25; 25.1, 25.2, 25.3, 25.4) des Gewichts des spezifischen Unterteils (19) kontrolliert wird, wobei der Erfassungssensor (25; 25.1, 25.2, 25.3, 25.4) des Gewichts des spezifischen Unterteils (19) mindestens teilweise als ein Zylinder ausgelegt ist, der einen nach unten offenen internen Sitz (25a) aufweist und ausgelegt ist, um das zu wiegende, spezifische Unterteil (19) aufzunehmen, und eine Kappe (25b), die den internen Sitz (25a) am oberen Teil verschließt und das spezifische Unterteil (19) in der hohen Gewichtskontrollposition bedeckt, wobei der interne Sitz (25a) durch eine Seitenwand oder Hülle (25c) definiert wird, mit einer im Wesentlichen zylindrischen Form, wobei eine untere Eintrittsöffnung des Unterteils (25d) zum Einsetzen des Unterteils (19) in den internen Sitz (25a) vorgesehen ist,
wobei mindestens eine Präzisionswaage (34) ein Unterteil (19) wiegt, das von einer oder mehreren Aufgreifvorrichtungen (31) aus einer Wiegestation (14) aufgegriffen wurde,
wobei das Gewicht der Kappe (20), der Kapseln (30) und des Unterteils (19) durch eine Kontrollstation (12) kontrolliert wird.

6. Verfahren wie in Anspruch 5, **dadurch gekennzeichnet, dass,** einer ersten Einführungsstation vorgelagert, mindestens das Gewicht des spezifischen Unterteils (19) gewogen und/oder kontrolliert wird.

7. Verfahren wie in Anspruch 5 oder 6, **dadurch gekennzeichnet, dass** der spezifische Erfassungssensor (25; 25.1, 25.2, 25.3, 25.4) des Gewichts des spezifischen Unterteils (19) stationär positioniert ist, wobei das spezifische Unterteil (19) in Richtung auf den Gewichtserfassungssensor (25; 25.1, 25.2, 25.3, 25.4)beweglich ist.

8. Verfahren wie in Anspruch 5 oder 6, **dadurch gekennzeichnet, dass** der spezifische Erfassungssensor (25; 25.1, 25.2, 25.3, 25.4) des Gewichts des spezifischen Unterteils (19) aus einer Position, in der er das Gewicht nicht feststellt, in eine Position beweglich ist, in der er das Gewicht feststellt.

9. Verfahren wie in einem Anspruch von 5 bis 8, **dadurch gekennzeichnet, dass** der Hauptschritt nach der Einführung von jeder der bestimmten Substanzen in das spezifische Unterteil (19) vorgesehen ist.

10. Verfahren nach einem Anspruch von 5 bis 9, **dadurch gekennzeichnet, dass** es vor dem Hauptschritt einen Schritt umfasst, bei dem das spezifische Unterteil (19) und die spezifische Kappe (20) mit einer der spezifischen Kapseln (30) assoziiert wird und jeweils in einen unteren beweglichen Teil (22) und einen oberen beweglichen Teil (21) eines Sektors (37) einer entsprechenden Maschine zum dosierten Einführen und Wiegen (10) gebracht wird, wobei der untere bewegliche Teil (22) und der obere bewegliche Teil (21) sich synchron bewegen, um die Dosiseinführungsposition und die Gewichtskontrollposition zu definieren, wobei während der Einführung der Dosis in das spezifische Unterteil (19) der untere bewegliche Teil (22) lateral oder radial in Bezug auf den oberen beweglichen Teil (21) positioniert wird.

11. Verfahren wie in einem Anspruch von 5 bis 10, **dadurch gekennzeichnet, dass** in Übereinstimmung mit der Dosiseinführungsposition Einführungsmittel (28.1, 28.2, 28.3) eine gewünschte Menge der bestimmten Substanz abgeben, die sie ins Innere des spezifischen Unterteils (19) einführen, wobei auf der Basis der Daten, die mindestens von dem spezifischen Erfassungssensor (25; 25.1, 25.2, 25.3, 25.4) des Gewichts des spezifischen Unterteils (19) festgestellt wurden, eine Kontroll- und Befehlseinheit im Feedbackmodus wirkt und die Abgabe der bestimmten Substanz durch das spezifische Einführungsmittel (28.1, 28.2, 28.3) reguliert.

12. Verfahren nach einem Anspruch von 5 bis 11, **dadurch gekennzeichnet, dass** Kontrollen am Gewicht von mindestens einem spezifischen Unterteil (19) allein und mit einer oder mehreren eingeführten Substanzen mittels der Präzisionswaage (34) ausgeführt werden, wobei das festgestellte Datenelement verwendet wird, um individuelle und spezifische Lieferstationen neu zu kalibrieren.

13. Methode wie in Anspruch 12, **dadurch gekennzeichnet, dass** die die Präzisionswaage (34) verwendende Kontrolle durch Aufgreifen des spezifischen Unterteils (19) an einer spezifischen Station ausgeführt wird, wobei das Aufgreifen automatisiert ist, oder alternativ dadurch, dass die präzise Gewichtskontrolle von mindestens einem spezifischen Unterteil (19) allein und mit einer oder mehreren eingeführten Substanzen unter Anwendung der Präzisionswaage (34) am Zyklusende bei geschlossener Kapsel (30) ausgeführt wird, wobei das festgestellte Datenelement verwendet wird, um individuelle und spezifische Lieferstationen neu zu kalibrieren.

14. Verfahren wie in einem Anspruch von 5 bis 13, **dadurch gekennzeichnet, dass** es einen Wiege- oder Gewichtskontrollschritt der spezifischen Kappe (20) umfasst, die zum spezifischen Unterteil (19) passt, das gewogen wird, oder dessen Gewicht kontrolliert wird, ausgeführt durch einen Erfassungssensor (24) und /oder Kontroller des Gewichts der spezifizierten Kappe (20).

15. Verfahren wie in einem Anspruch von 5 bis 14, **dadurch gekennzeichnet, dass** mindestens der Erfassungssensor (25.1, 25.2, 25.3, 25.4) des Gewichts des spezifischen Unterteils (19) ein Gewichtserfasser des indirekten Typs ist, ausgewählt aus einer Gruppe, umfassend einen kapazitiven Sensor oder einen Strahlungserfassungssensor, insbesondere einen Mikrowellen- oder Infraroterfassungssensor.

## Revendications

1. Machine pour commander le poids d'une ou plusieurs substances introduites de manière séquentielle dans des capsules spécifiques (30) à des fins pharmaceutiques, chacune desdites capsules spécifiques (30) consistant en un fond spécifique (19) et un couvercle spécifique (20), comprenant non seulement des postes pour alimenter et ouvrir des capsules spécifiques (11), mais également au moins un poste de commande (12) pour commander le poids dudit fond spécifique (19) et dudit couvercle spécifique (20), et au moins un poste de dosage (13) avec un poste de pesage respectif (14), lesdits postes de dosage (13) et de pesage (14) étant prévus pour chacune desdites substances introduites dans ledit fond spécifique (19), et des parties mobiles, ledit fond spécifique (19) et ledit couvercle spécifique (20) étant configurés pour être déplacés en synchronisation coordonnée par des parties mobiles, respectivement inférieure (22) et supérieure (21), lesdites parties mobiles inférieure (22) et supérieure (21) étant configurées pour être positionnées, dans lesdits postes de dosage (13), sur un plan vertical distinct, le poste de commande (12) comprend en outre un capteur de détection (25.1, 25.2, 25.3, 25.4) du poids du fond spécifique (19) et un capteur (24) pour détecter et/ou commander le poids du couvercle spécifique (20), ledit fond spécifique (19), vide ou avec une ou plusieurs substances introduites, et ledit couvercle spécifique (20) sont chacun associés avec des moyens d'extraction (26) et des moyens de positionnement (27) respectifs configurés pour être déplacés d'une position de dosage basse à une position de pesage haute dans laquelle ledit fond (19) et ledit couvercle (20) sont configurés chacun pour coopérer avec le capteur de détection (25.1, 25.2, 25.3, 25.4) du poids du fond spécifique (19) et le capteur (24) pour détecter et/ou commander le poids du couvercle spécifique (20),
dans lequel chaque capteur de détection (25.1, 25.2, 25.3, 25.4) du poids du fond spécifique (19) est configuré au moins en partie sous la forme d'un cylindre, ayant un siège intérieur (25a) ouvert vers le bas et configuré pour recevoir le fond spécifique (19) à peser et un couvercle (25b), qui ferme ledit siège intérieur (25a) au niveau de la partie supérieure et couvre le fond spécifique (19) dans la position haute de commande de poids, le siège intérieur (25a) étant défini par une paroi latérale ou coque (25c), de forme essentiellement cylindrique, une ouverture d'entrée inférieure du fond (25d) étant prévue pour insérer le fond spécifique (19) dans le siège intérieur (25a),
dans lequel ladite machine est associée à au moins une balance de précision (34),
dans lequel chacun des postes de pesée (14) est associé à un ou plusieurs d'enlèvement (31) configurés pour commander le poids, configurés pour enlever un fond spécifique (19) à partir d'un poste de pesage (14), après qu'un fond spécifique (19) a été enlevé, ledit fond spécifique (19) est pesé avec ladite au moins une balance de précision (34) ;
dans lequel ladite machine comprend un poste de commande (12) configuré pour commander le poids du couvercle spécifique (20), des capsules (30) et du fond spécifique (19).

2. Machine selon la revendication 1, **caractérisée en ce que** les fonds spécifiques (19) et couvercles spécifiques (20) des capsules spécifiques (30) sont situés dans des secteurs (37).

3. Machine selon la revendication 1 ou 2, **caractérisée en ce qu'**elle comprend au moins les postes suivants coopérant avec des secteurs spécifiques (37) :
- un poste d'alimentation et d'ouverture des capsules (11) ;
- au moins un poste de dosage (13) ;
- au moins un poste de pesage (14) :
- un poste de fermeture des capsules (15) ;
- un poste de déchargement des bonnes capsules (16) ;
- un poste pour expulser les capsules à jeter (17).

4. Machine selon l'une quelconque des revendications précédentes, **caractérisée en ce que** le capteur de détection de poids inférieur (25 ; 25.1, 25.2, 25.3, 25.4) est un détecteur de poids de type indirect, choisi dans un groupe comprenant un capteur capacitif, ou un capteur de détection à rayonnement, en particulier un capteur de détection à micro-ondes ou infrarouge.

5. Méthode pour commander le poids d'une ou plusieurs substances introduites de manière séquentielles dans des capsules spécifiques (30) à des fins pharmaceutiques, chacune desdites capsules spécifiques (30) consistant au moins en un fond spécifique (19) et un couvercle spécifique (20), **caractérisée en ce que** ladite méthode comprend au moins une étape principale dans laquelle au moins ledit fond spécifique (19) est déplacé d'une position basse pour l'introduction de la dose, dans laquelle ladite substance est introduite de manière commandée dans ledit fond spécifique (19), à une position haute pour commander le poids, dans laquelle ledit fond spécifique (19) est pesé, ou le poids dudit fond (19) est commandé, par l'intermédiaire d'un capteur de détection spécifique (25 ; 25.1, 25.2, 25.3, 25.4) du poids du spécifique bas (19), ledit capteur de détection (25 ; 25.1, 25.2, 25.3, 25.4) du poids du fond spécifique (19) étant au moins partiellement configuré sous la forme d'un cylindre, ayant un siège intérieur (25a) ouvert vers le bas et configuré pour recevoir le fond spécifique (19) à peser et un couvercle (25b), qui ferme ledit siège intérieur (25a) au niveau de la partie supérieure et couvre le fond spécifique (19) dans la position haute de commande du poids, le siège intérieur (25a) étant défini par une paroi latérale, ou coque, (25c), de forme essentiellement cylindrique, une ouverture d'entrée inférieure du fond (25d) étant prévue pour insérer le fond (19) dans le siège intérieur (25a),
dans laquelle au moins une balance de précision (34) pèse un fond (19) pris par un ou plusieurs dispositifs d'enlèvement (31) à partir d'un poste de pesage (14),
dans laquelle le poids du couvercle (20), des capsules (30) et du fond (19) est commandé par un poste de commande (12).

6. Méthode selon la revendication 5, **caractérisée en ce qu'**en amont d'un premier poste d'introduction, au moins le poids du fond spécifique (19) est pesé et/ou commandé.

7. Méthode selon les revendications 5 ou 6, **caractérisée en ce que** ledit capteur de détection spécifique (25 ; 25.1, 25.2, 25.3, 25.4) du poids du fond spécifique (19) est positionné stationnaire, le fond spécifique (19) étant mobile vers ledit capteur de détection de poids (25 ; 25.1, 25.2, 25.3, 25.4).

8. Méthode selon les revendications 5 ou 6, **caractérisée en ce que** ledit capteur de détection spécifique (25 ; 25.1, 25.2, 25.3, 25.4) du poids du fond spécifique (19) est mobile d'une position dans laquelle il ne détecte pas le poids vers une position dans laquelle il détecte le poids.

9. Méthode selon l'une quelconque des revendications 5 à 8, **caractérisée en ce que** ladite étape principale est prévue après l'introduction de chacune desdites substances particulières dans ledit fond spécifique (19).

10. Méthode selon l'une quelconque des revendications 5 à 9, **caractérisée en ce qu'**avant ladite étape principale, elle comprend une étape dans laquelle ledit fond spécifique (19) et ledit couvercle spécifique (20) sont associés à l'une desdites capsules spécifiques (30) et placés respectivement dans une partie mobile inférieure (22) et une partie mobile supérieure (21) d'un secteur (37) d'une machine correspondante pour une introduction dosée et un pesage (10), dans laquelle ladite partie mobile inférieure (22) et ladite partie mobile supérieure (21) se déplace de manière synchronisée afin de définir ladite position d'introduction de dose et ladite position de commande de poids, dans laquelle lors de l'introduction de la dose dans le fond spécifique (19), ladite partie mobile inférieure (22) est positionnée latéralement ou radialement par rapport à ladite partie mobile supérieure (21).

11. Méthode selon l'une quelconque des revendications 5 à 10, **caractérisée en ce qu'**en correspondance avec ladite position d'introduction de dose, des moyens d'introduction (28.1, 28.2, 28.3) délivrent une quantité souhaitée de la substance particulière, en l'introduisant à l'intérieur dudit fond spécifique (19), dans laquelle sur la base des données détectées au moins par le capteur de détection spécifique (25 ; 25.1, 25.2, 25.3, 25.4) du poids du fond spécifique (19), une unité de commande et d'instruction agit en retour et régule la livraison de ladite substance particulière par les moyens d'introduction spécifiques (28.1, 28.2, 28.3).

12. Méthode selon l'une quelconque des revendications 5 à 11, **caractérisée en ce que** des commandes sont réalisées sur le poids au moins d'un fond spécifique (19) seul et avec un ou plusieurs substances introduites, par l'intermédiaire de ladite balance de précision (34), la donnée détecté étant utilisée pour recalibrer des postes de livraison individuels et spécifiques.

13. Méthode selon la revendication 12, **caractérisée en ce que** la commande utilisant la balance de précision (34) est réalisée en enlevant le fond spécifique (19) dans un poste spécifique, ledit enlèvement étant automatisé, ou en variante la commande précise du poids d'au moins un fond spécifique (19) seul et avec une ou plusieurs substances introduites, en utilisant la balance de précision (34), dans laquelle la donnée détectée est utilisée pour calibrer les postes de livraison individuels et spécifiques, est réalisée en fin de cycle avec la capsule (30) fermée.

14. Méthode selon l'une quelconque des revendications 5 à 13, **caractérisée en ce qu'**il fournit une étape de pesage ou de commande du poids du couvercle spécifique (20) apparié avec le fond spécifique (19) qui est pesé ou dont le poids est commandé, effectuée par un capteur de détection (24) et/ou une commande du poids du couvercle spécifique (20).

15. Méthode selon l'une quelconque des revendications 5 à 14, **caractérisée en ce qu'**au moins le capteur de détection (25.1, 25.2, 25,3, 25.4) du poids du fond spécifique (19) est un détecteur de poids du type indirect, choisi dans un groupe comprenant un capteur capacitif, ou un capteur de détection à rayonnement, en particulier un capteur de détection à micro-ondes ou infrarouge.
